## Europäisches Patentamt

## European Patent Office

## Office européen des brevets

(19)

(11) Veröffentlichungsnummer: **0 192 013**

**A2**

(12) **EUROPÄISCHE PATENTANMELDUNG**

(21) Anmeldenummer: **85730052.9**

(22) Anmeldetag: **03.04.85**

(51) Int. Cl.⁴: **G 01 N 21/35**
**G 01 N 21/31**

(30) Priorität: **21.02.85 DE 3506372**

(43) Veröffentlichungstag der Anmeldung:
**27.08.86 Patentblatt 86/35**

(84) Benannte Vertragsstaaten:
**AT BE CH DE FR GB IT LI LU NL SE**

(71) Anmelder: **Dr. THIEDIG & CO.**
**Prinzenallee 78-79**
**D-1000 Berlin 65(DE)**

(72) Erfinder: **Thiedig, Bernd, Dipl.-Ing.**
**Limastrasse 8**
**D-1000 Berlin 37(DE)**

(74) Vertreter: **Bergmann, Jürgen, Dipl.-Ing. et al,**
**Patentanwälte PFENNING, MEINIG & PARTNER**
**Kurfürstendamm 170**
**D-1000 Berlin 15(DE)**

(54) **Verfahren zur Messung der Konzentration eines Gases und Vorrichtung zu dessen Durchführung.**

(57) Es wird ein Verfahren zur kontinuierlichen Messung der Konzentration eines mehratomigen, nicht elementaren Gases mit einem Infrarot-Einstrahlphotometer beschrieben. Eine von einer getakteten Strahlungsquelle (2) ausgehende Wechselstrahlung trifft nach Durchgang durch ein Interferenzfilter (3) und eine Absorptionsküvette (4) und gegebenenfalls ein zweites Interferenzfilter (7) auf einen strahlungsempfindlichen Empfänger (8). Der Durchlaßbereich der Interferenzfilter stimmt mit dem größten Absorptionsmaximum des Gases, dessen Konzentration gemessenwird, überein. Durch die Absorptionsküvette strömt ein Gasgemisch, welches das Gas, dessen Konzentration gemessen wird, enthält. Das Ausgangssignal des strahlungsempfindlichen Empfängers wird nach Verstärkung, Filterung und Gleichrichtung dem einen Eingang einer Additionsschaltung (13) zugeführt. Dem anderen Eingang der Additionsschaltung wird ein Bezugssignal zugeführt. Dieses Bezugssignal wird dadurch bestimmt, daß ein Gas, das frei von dem Gas ist, dessen Konzentration gemessen wird, durch die Absorptionsküvette geleitet wird und mit Hilfe der Anzeigevorrichtung für die Konzentration des zu messenden Gases ein Nullabgleich durch entsprechende Veränderung des Bezugssignals durchgeführt wird.

Verfahren zur Messung der Konzentration eines Gases
und Vorrichtung zu dessen Durchführung

Die Erfindung betrifft ein Verfahren gemäß dem
Oberbegriff des Anspruchs 1 sowie eine Vorrichtung
zu dessen Durchführung.

Aus Hengstenberg/Sturm/Winkler:"Messen, Steuern
und Regeln in der chemischen Technik", Band II,
3. Auflage 1980, Seiten 24/25, ist ein Einstrahl-
Wechsellichtphotometer bekannt, bei dem zwischen
einer konstanten Stahlenquelle und einer von dem
zu untersuchenden gasdurchströmten Absorptionsküvette eine drehbare Filterscheibe angeordnet ist.
In dieser sind radialsymmetrisch zwei Interferenzfilter vorgesehen, deren Durchlaßbereich zum einen
in dem Bereich des Absorptionsmaximums des zu untersuchenden Gases und zum anderen in dem Bereich, in
dem das Gas nur eine geringe oder möglichst keine
Absorption aufweist, liegen. Diese nacheinander in
den Strahlengang gebrachten Interferenzfilter erzeugen abwechselnd ein Meßlichtbündel und ein Ver-

0192013

gleichslichtbündel, die auf einen photoelektrischen Empfänger treffen. Die entsprechenden Ausgangssignale des photoelektrischen Empfängers werden miteinander ins Verhältnis gesetzt und ergeben so ein Maß für die Konzentration des zu untersuchenden Gases.

Um die Verwendung der rotierenden Filterscheibe und des hierfür erforderlichen geregelten Antriebs zu vermeiden, ist aus der DE-OS 32 38 179 eine Anordnung zur kontinuierlichen Messung der Konzentration eines mehratomigen, nichtelementaren Gases mit einem nichtdispersiven Infrarot-Einstrahlphotometer bekannt, bei der eine von einer getakteten Strahlungsquelle ausgehende Wechsellichtstrahlung nach Durchgang durch eine von einem Gas durchströmte Absorptionsküvette gleichzeitig auf zwei Photoempfänger trifft, wobei nur einem der Photoempfänger ein Filter vorgeschaltet ist, und die Ausgangssignale der Photoempfänger in einer Quotientenschaltung ausgewertet werden. Dabei ist das Filter ein Interferenzfilter, dessen Durchlaßbereich mit dem größten Absorptionsmaximum des Gases, dessen Konzentration gemessen wird, übereinstimmt.

Beide bekannten Photometer weisen den Nachteil auf, daß das Bezugssignal für das Meßsignal aus der Strahlung selbst abgeleitet wird, die praktisch ungefiltert bzw. so gefiltert ist, daß praktisch keine Absorption auftritt. Bei der Erzeugung des Bezugssignals können daher Fehler auftreten, die das Meßergebnis verfälschen und beeinflussen. So kann die Strahlenabsorption in dem Bereich, in dem das Gas, dessen Konzentration bestimmt wird, nur geringe oder möglichst keine Absorption aufweist, durch weitere in der Küvette befindliche Gase beeinflußt werden. Weiterhin kann die photoelektrische Umwandlung zu Fehlern führen,

0192013

insbesondere dann, wenn für das Meßsignal und das Bezugssignal getrennte Strahlungsempfänger, Verstärker und Gleichrichter benutzt werden. Auch sind die beiden bekannten Photometer apparativ aufwendig, da im einen Falle die drehbare Filterscheibe und deren Antrieb und im anderen Falle zusätzlich ein Strahlungsempfänger, ein Verstärker, ein Kondensator und ein Synchrongleichrichter für die Erzeugung des Bezugssignals benötigt werden.

Es ist daher die Aufgabe der vorliegenden Erfindung, ein Verfahren zur kontinuierlichen Messung der Konzentration eines mehratomigen, nicht elementaren Gases mit einem Infrarot-Einstrahlphotometer, bei der eine von einer getakteten Strahlungsquelle ausgehende Wechselstrahlung nach Durchgang durch eine von einem Gas durchströmte Absorptionsküvette auf einen strahlungsempfindlichen Empfänger trifft, dessen Ausgangssignal sowie ein Bezugssignal einer Rechenschaltung zugeführt werden, und bei der im Strahlengang eine Filterung durchgeführt wird, anzugeben, das genauere Messungen ermöglicht und bei dem der apparative Aufwand gering ist.

Diese Aufgabe wird erfindungsgemäß gelöst durch die im kennzeichnenden Teil des Anspruchs 1 angegebenen Merkmale. Vorteilhafte Ausbildungen des erfindungsgemäßen Verfahrens sowie einer Vorrichtung zu dessen Durchführung ergeben sich aus den Unteransprüchen.

Das erfindungsgemäße Verfahren zeichnet sich dadurch aus, daß als Bezugssignal eine konstante, gerätespezifische und durch einen Eichvorgang bestimmbare Spannung verwendet wird und daß in der Rechenschaltung die Summe oder die Differenz der zugeführten Signale gebildet wird. Es wird somit nicht ein Bezugssignal ermittelt, das direkt aus dem jeweiligen Zustand der Strahlung abgeleitet wird, sondern ein vorher bestimmtes, bei der Geräteeichung gewonnenes Bezugssignal.

Zur Bestimmung des Bezugssignals werden vorzugsweise ein von dem Gas, dessen Konzentration zu messen ist, freies Gas (Nullgas) durch die Absorptionsküvette geleitet und ein Nullabgleich bei einer für die Anzeige der Konzentration vorgesehenen Anzeigevorrichtung durchgeführt. Zur Filterung der Strahlung wird vorteilhaft ein Interferenzfilter vorgesehen, dessen Durchlaßbereich mit dem größten Absorptionsmaximum des Gases, dessen Konzentration gemessen wird, übereinstimmt. Bei einer Vorrichtung zur Durchführung des Verfahrens ist vorzugsweise ein erstes Interferenzfilter zwischen Strahlungsquelle und Absorptionsküvette angeordnet. Dies bedeutet, daß die Absorptionsküvette von einer Strahlung mit praktisch nur einer Wellenlänge durchkreuzt wird, so daß Fehler, die sich bei einer Breitbandeinstrahlung durch Störgase oder Abstrahlungseffekte ergeben, ausgeschaltet sind.

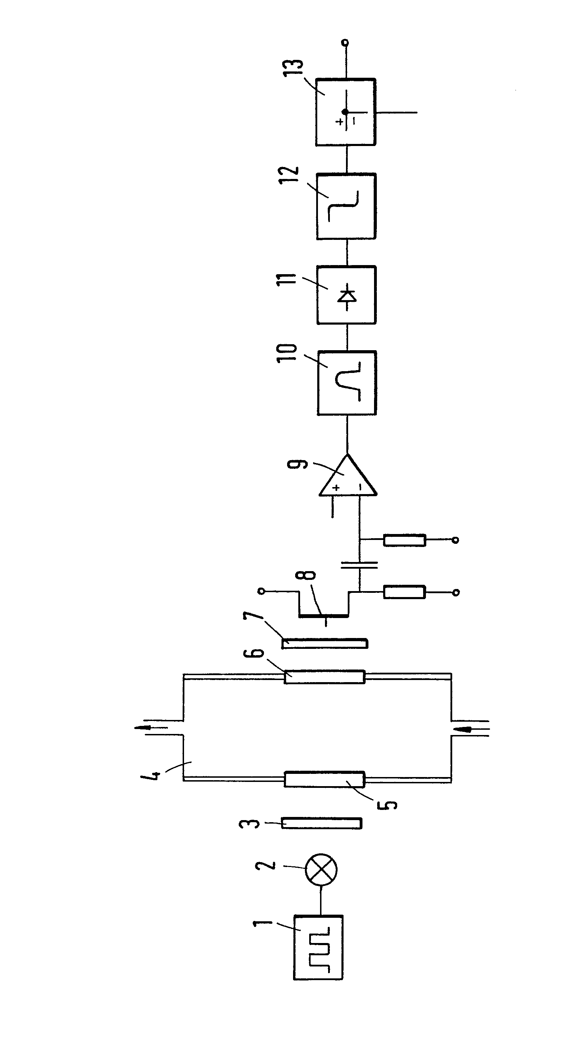

Die Erfindung wird im folgenden anhand eines in der Figur dargestellten Ausführungsbeispiels näher erläutert. Diese zeigt den schaltungsmäßigen Aufbau eines Infrarot-Einstrahlphotometers.

Eine von einer getakteten Gleichspannungsquelle 1 gespeiste Strahlungsquelle 2, die eine besonders geringe Wärmekapazität besitzt, gibt Strahlungsimpulse entsprechend der Frequenz der getakteten Gleichspannung vorzugsweise im Bereich von 1 bis 30 Hz ab. Die Strahlen durchlaufen ein erstes Interferenzfilter 3, dessen Durchlaßbereich mit dem größten Absorptionsmaximum des Gases übereinstimmt, dessen Konzentration gemessen wird.

Damit wird eine Querempfindlichkeit, die von der Überlagerung der Absorptionsbanden von anderen mit dem zu untersuchenden Gas vermischten Gasen herrührt, beseitigt. Die gefilterten, im Infrarotbereich liegenden Strahlen durchlaufen anschließend ein in der Wandung einer Absorptionsküvette 4 angeordnetes $CaF_2$-Fenster 5. Die Absorptionsküvette 4 wird von einem Gasgemisch durchströmt, das das Gas, dessen Konzentration bestimmt werden soll, enthält. Je höher die Konzentration dieses Gases ist, um so stärker wird die einfallende Strahlung durch Absorption geschwächt. Dort, wo die Strahlung aus der Absorptionsküvette 4 austritt, besitzt diese ein weiteres $CaF_2$-Fenster 6. Hinter diesem befindet sich ein zweites Interferenzfilter 7. Es ist möglich, die $CaF_2$-Fenster 5 oder 6 oder eines von ihnen wegzulassen und das entsprechende vor- bzw. nachgeschaltete Interferenzfilter in die Wandung der Absorptionsküvette 4 einzusetzen, so daß diese gleichzeitig als Eintritts- bzw. Austrittsfenster für die Strahlung dienen. Grundsätzlich kann auch das zweite Interferenzfilter 7 weggelassen werden, jedoch ist dieses für eine bessere Filterung der Strahlung vorteilhaft. Der Durchlaßbereich des Interferenzfilters 7 kann dem des Interferenzfilters 3 entsprechen; er kann jedoch auch um einen Teil der Durchlaßbereichsbreite nach höheren oder tieferen Wellenlängen gegenüber diesen verschoben sein, wodurch der Intensitätsverlauf der durchgelassenen Strahlung wesentlich steilere Flanken erhält.

Hinter dem zweiten Interferenzfilter 7 ist ein pyroelektrischer Detektor 8 angeordnet, der, wenn man das $CaF_2$-Fenster 6 und das Interferenzfilter 7 wegläßt, direkt auf die Wandung der Absorptionsküvette 4 aufgesetzt oder in eine Öffnung in dieser eingesetzt sein kann. Der pyroelektrische Detektor 8 wandelt die auftreffende Strahlung in ein entsprechendes elektrisches Signal um, das durch die Taktung der Strahlungsquelle 2 und deren Trägheit einen fast sinusförmigen Verlauf hat. Der Wechselspannungsanteil des Ausgangssignals des Detektors 8 gelangt über einen Verstärker 9 zu einem Bandpaßfilter 10. Das von diesem durchgelassene Signal wird in einer Gleichrichterschaltung 11 gleichgerichtet und durch ein Tiefpaßfilter 12, dessen Durchlaßbereich auf Frequenzen unterhalb der Taktfrequenz der Gleichspannungsquelle 1 begrenzt ist, geführt. Das so aufbereitete Meßsignal gelangt an den einen Eingang einer Additionsschaltung 13, deren anderem Eingang das Bezugssignal zugeführt wird. Die Eingänge der Additionsschaltung 13 sind so gepolt, daß die Differenz aus den beiden Eingangssignalen gebildet wird. Das Bezugssignal hat absolut einen höheren Wert als das Meßsignal, da das Bezugssignal dadurch bestimmt wird, daß durch die Absorptionsküvette 4 ein Gas geleitet wird, das frei ist von dem Gas, dessen Konzentration gemessen werden soll, so daß eine Strahlenabsorption nicht auftritt. Mit Hilfe der Anzeigevorrichtung für die Konzentration wird dann durch entsprechende Einstellung des Bezugsignals ein Nullabgleich durchgeführt. Das Bezugssignal entspricht somit dem Meßsignal, wenn keine Strahlenabsorption erfolgt. Das Meßsignal ist abhängig von der Konzentration des zu messenden Gases, wobei es mit steigender Konzentration abnimmt. Das Ausgangssignal der Additionsschaltung 13 ist daher ein Maß für die Konzentration des Gases, das das größte Absorptionsmaximum im Durchlaßbereich der Interferenzfilter 3 und 7 besitzt.

Sollen die Konzentrationen mehrerer verschiedener Gase des durch die Absorptionsküvette 4 strömenden Gasgemisches gemessen werden, so kann die von der Strahlungsquelle 2 ausgehende Strahlung parallel durch räumlich gegeneinander versetzte, den Absorptionsmaxima der zu messenden Gase entsprechende Interferenzfilter gelenkt werden. Jedem dieser Interferenzfilter
bzw. Interferenzfilterpaare ist ein pyroelektrischer
Detektor zugeordnet, dessen Ausgangssignale in der
beschriebenen Weise ausgewertet werden. Soll der
Quotient der Konzentrationen zweier Gase angezeigt
werden, dann sind die Ausgänge der entsprechenden
Additionsschaltungen mit den Eingängen einer Quotientenschaltung zu verbinden.

Patentansprüche

1. Verfahren zur kontinuierlichen Messung der Konzentration eines mehratomigen, nicht elementaren Gases mit einem Infrarot-Einstrahlphotometer, bei der eine von einer getakteten Strahlungsquelle ausgehende Wechselstrahlung nach Durchgang durch eine von einem Gas durchströmte Absorptionsküvette auf einen strahlungsempfindlichen Empfänger trifft, dessen Ausgangssignal sowie ein Bezugssignal einer Rechenschaltung zugeführt werden, und bei der im Strahlengang eine Filterung durchgeführt wird, d a d u r c h g e k e n n z e i c h n e t , daß als Bezugssignal eine konstante, gerätespezifische und durch einen Eichvorgang bestimmbare Spannung verwendet wird und daß in der Rechenschaltung (13) die Summe oder die Differenz der zugeführten Signale gebildet wird.

2. Verfahren nach Anspruch 1, dadurch gekennzeichnet, daß zur Bestimmung des Bezugssignals ein von dem Gas, dessen Konzentration zu messen ist, freies Gas durch die Absorptionsküvette (4) geleitet und ein Nullabgleich bei einer für die Anzeige der Konzentration vorgesehenen Anzeigevorrichtung durchgeführt werden.

3. Verfahren nach Anspruch 1 oder 2, dadurch gekennzeichnet, daß zur Filterung der Strahlung ein oder mehrere Interferenzfilter(3,7) verwendet werden, deren Durchlaßbereich mit dem größten Absorptionsmaximum des Gases, dessen Konzentration gemessen wird, übereinstimmt.

4. Vorrichtung zur Durchführung des Verfahrens nach einem der Ansprüche 1 bis 3, dadurch gekennzeichnet, daß zur Filterung der Strahlung ein erstes Interferenzfilter (3) zwischen Strahlungsquelle (2) und Absorptionsküvette (4) angeordnet ist.

5. Vorrichtung nach Anspruch 4, dadurch gekennzeichnet, daß ein zweites Interferenzfilter (7) zwischen der Absorptionsküvette (4) und dem strahlungsempfindlichen Empfänger (8) angeordnet ist.

6. Vorrichtung nach Anspruch 4 oder 5, dadurch gekennzeichnet, daß das oder die Interferenzfilter Einlaß- und/oder Auslaßfenster für die Strahlung in der Absorptionsküvette (4) bilden.

7. Vorrichtung nach Anspruch 4 oder 5, dadurch gekennzeichnet, daß im Strahlengang für den Eintritt in die und/oder Austritt aus der Absorptionsküvette (4) $CaF_2$-Fenster (5,6) vorgesehen sind.

8. Vorrichtung nach einem der Ansprüche 5 bis 7, dadurch gekennzeichnet, daß der Durchlaßbereich des zweiten Interferenzfilters (7) gleich oder um einen Teil der Durchlaßbereichsbreite nach höheren oder tieferen Wellenlängen verschoben gegenüber dem des ersten Interferenzfilters (3) ist.

9. Vorrichtung nach einem der Ansprüche 4 bis 8, dadurch gekennzeichnet, daß der strahlungsempfindliche Empfänger ein pyroelektrischer Detektor (8) ist.

10. Vorrichtung nach einem der Ansprüche 4 bis 9, dadurch gekennzeichnet, daß zwischen den strahlungsempfindlichen Empfänger (8) und die Rechenschaltung (13) ein Bandpaßfilter (10), eine Gleichrichterschaltung (11) und ein Tiefpaßfilter (12) geschaltet sind.

11. Vorrichtung nach einem der Ansprüche 4 bis 10, dadurch gekennzeichnet, daß die Rechenschaltung eine Additionsschaltung (13) ist.

12. Vorrichtung nach einem der Ansprüche 4 bis 11, dadurch gekennzeichnet, daß zur Messung der Konzentrationen verschiedener Gase in einer Absorptionsküvette mehrere entsprechende, räumlich gegeneinander versetzte Interferenzfilter und strahlungsempfindliche Empfänger vorgesehen sind.

13. Vorrichtung nach Anspruch 12, dadurch gekennzeichnet, daß zur Bestimmung des Verhältnisses der Konzentrationen zweier Gase die Ausgangssignale der jeweiligen Rechenschaltung einer Quotientenschaltung zuführbar sind.